# EUROPEAN PATENT APPLICATION

(11) **EP 3 719 607 A1**
(43) Date of publication of application: **07.10.2020**
(21) Application number: 19166681.7
(22) Date of filing: 02.04.2019
(51) Int. Cl.: G05D 21/00

(54) **SMART CONTAINER DEVICE, TRANSPORTATION TOOL, USER TERMINAL AND MANAGEMENT SYSTEM**

(71) Applicant: Covestro Deutschland AG, 51373 Leverkusen (DE)
(72) Inventor: CHENXI, Zhang, 200135 Pudong District, Shangai (CN)
(74) Representative: Levpat

(57) **Abstract**

The present invention relates to a smart container device (1), a transportation tool, a user terminal (31) and a management system for smart container device. The smart container device (1) comprising a body (2) for storing fluidic materials, a control system (4) arranged on the body (2) and comprising: a control unit (5), a wireless communicating device (6) connected with the control unit (5) and communicating with the outside, a pH value monitoring device (7) for monitoring a pH value of the fluidic materials within the body (2) and sending it to the control unit (5), and a pH value adjusting device (8), wherein the control unit (5) determines the pH value received and controls, after determining the pH value to exceed a preset pH range, the pH value adjusting device (8) to release an additive to the fluidic materials within the body (2) and limit the pH value of the fluidic materials within the body (2) within the preset pH range. The employment of the present invention may intelligently monitor the states of containers and fluidic materials, which may save costs, increase performance of environmental protection and strengthen users' using experience.

## Description

### TECHNICAL FIELD

The present application relates to the technical field of containers, especially to a smart container device, a transportation tool, a user terminal and a management system for smart container device.

### BACKGROUND ART

With a rapid development and continual goods trading in modern societies, a variety of containers have been applied quite widely and bring great convenience to people's work and daily lives, commercial operations, enterprise management and so on. Although container products of various types have been provided in the prior art to meet different requirements, these containers available contain shortcomings in aspects of goods storage and transportation, such as condition control, smart management, security, cost saving, eco-performance and user experience, which may need to be improved and optimized further.

### CONTENTS OF INVENTION

In view of the above, the present invention provides a smart container device, a transportation tool, a user terminal and a management system for smart container device, so as to address or at least relieve one or more problems existing in the prior art and in other aspects.

In the first aspect, the present invention provides a smart container device comprising a body for storing fluidic materials, which further comprises: a control system arranged on the body and comprising: a control unit, a wireless communicating device connected with the control unit and communicating with the outside, a pH value monitoring device for monitoring a pH value of the fluidic materials within the body and sending it to the control unit, and a pH value adjusting device, wherein the control unit determines the pH value received and controls, after determining the pH value to exceed a preset pH range, the pH value adjusting device to release an additive to the fluidic materials within the body and limit the pH value of the fluidic materials within the body within the preset pH range.

In the smart container device according to the present invention, optionally, the pH value monitoring device comprises:
a single-bar measuring electrode provided with a measuring electrode and a reference electrode for being immersed into the fluidic materials within the body; and
a measurement processing module connected with the single-bar measuring electrode, for performing processing based on a potential difference between the measuring electrode and the reference electrode to acquire the pH range of the fluidic materials within the body to be measured.

In the smart container device according to the present invention, optionally, the pH value monitoring device further comprises a protecting sleeve for receiving the single-bar measuring electrode, which is provided with one or more through holes, and/or an alkali-resistant electrode is employ for the measuring electrode and the reference electrode.

In the smart container device according to the present invention, optionally, the pH value adjusting device comprises:
a reservoir for storing the additive; and
a releaser for releasing the additive stored in the reservoir to the fluidic materials within the body.

In the smart container device according to the present invention, optionally, the fluidic materials are a mixed liquor of polychloroprene dispersion adhesive, the additive is a solution of 10% KOH, and the control unit, when the pH value monitoring device detects the pH value of the fluidic materials within the body to be lower than 9.0, controls the releaser to release from the reservoir the additive to the fluidic materials until the pH value monitoring device detects the pH value of the fluidic materials within the body to be higher than 10.0.

In the smart container device according to the present invention, optionally, the control system further comprises:
a material consumption monitoring device, connected with the control unit, for monitoring the consumption level of the fluidic materials within the body; and/or
an opening monitoring device, connected with the control unit, for monitoring an open state of an opening of the body; and/or
a temperature monitoring device, connected with the control unit, for monitoring a temperature of the fluidic materials within the body; and/or
a pressure monitoring device, connected with the control unit, for monitoring a pressure of the fluidic materials within the body; and/or
a liquid level monitoring device, connected with the control unit, for monitoring the liquid level of the fluidic materials within the body; and/or
a homogenization processing device, connected with the control unit, for homogenizing the fluidic materials within the body, which comprises a stirrer and a reflux device; and/or
a temperature control device, connected with the control unit, for heating or cooling the fluidic materials within the body; and/or
a camera device, connected with the control unit, for monitoring the smart container device and/or set areas of surroundings thereof; and/or
a positioning device for monitoring the position of the smart container device.

In the smart container device according to the present invention, optionally, the storage temperatures of the fluidic materials within the body are 15°C-25°C; and/or the temperature monitoring device comprises a probe-type temperature meter arranged at an end of the body and having a measuring range at least from -20°C to +40°C; and/or
the positioning device employs GPS system, Beidou system and/or Galileo system for positioning.

In the smart container device according to the present invention, optionally, temperature control device comprises one or more steam-heating tubes, distributed on a surface of the body, for steam-heating the body.

In the smart container device according to the present invention, optionally, the control system is powered by a battery, the battery comprising a solar cell or a re-chargeable additional battery.

In the smart container device according to the present invention, optionally, the body is configured to be a box or a tank, and/or configured to have an inner layer and a outer layer, and/or configured to have at least one compartment, and/or configured to be provided frames on four sides of the body.

In the smart container device according to the present invention, optionally, the inner is made of a rigid material and coated with an anti-corrosion material on its inner surface, the rigid material comprising stainless steel and the anti-corrosion material comprising epoxy resin; and/or
the outer layer is made of a thermal insulation material with its outside applied with a rigid material, the thermal insulation material comprising a rigid polyurethane foam material and rock wool while the rigid material of the outer layer comprises glass steel; and/or
the frames are made of a metal material comprising high-strength steel.

In the smart container device according to the present invention, optionally, the control unit is configured to: exert, in response to a request of a user terminal, corresponding control over the control system via the wireless communicating device, or transmit to the user terminal information relevant to the request; or, push, via the wireless communicating device, state information of the smart container device and/or the state information of the fluidic materials within the body to the user terminal periodically or non-periodically.

Further, in the second aspect, the present invention provides a transportation tool, provided thereon with one or more of the smart container devices according to any one of above items.

In the transportation tool according to the present invention, optionally, the transportation tool comprises a car, a rail motor car and a ship.

Additionally, in the third aspect, the present invention provides a user terminal, configured to communicate with the wireless communicating device of the smart container device according to any one of above items, and configured for monitoring a state of the smart container device and/or a state of the fluidic materials within the body.

In the transportation tool according to the present invention, optionally, the user terminal comprises a fixed terminal and a mobile terminal, and/or the user terminal is in communicative connection with the wireless communicating device via a server set locally or in clouds, and/or wireless communication modes include 2G, 3G, 4G, 5G,Wi-Fi and Blue-Tooth.

Moreover, in the fourth aspect, the present invention provides a management system for smart container device, comprising:
a server, in communicative connection with the wireless communicating device of the smart container device according to any one of above items; and
a user terminal, in communicative connection with the server, for monitoring a state of the smart container device and/or a state of the fluidic materials within the body.

In the transportation tool according to the present invention, optionally, the user terminal comprises a fixed terminal and a mobile terminal, and/or the user terminal is in communicative connection with the wireless communicating device via a server set locally or in clouds, and/or wireless communication modes include 2G, 3G, 4G, 5G,Wi-Fi and Blue-Tooth.

From the following elaboration in combination with figures, one will clearly understand the principles, specialties, features and advantages of each technical solution of the present invention. For instance, employment of the technical solution provided by the present invention, in comparison with the prior art, could supervise containers and fluidic materials stored therein in a smart way, e.g., it could control the situations of fluidic materials, such as the temperature, pressure, liquid level, pH value quite easily, timely and effectively, and could also monitor the current positions of containers, which may thus help increase existing containers security and reliability and raise smart management level, and will save costs, increase eco-performance and enhance use experience of users.

### DESCRIPTION OF FIGURES

The figures and embodiments are combined below to further elaborate the details of the technical solution of the present invention. However, it shall be known that these figures are designed only for the purpose of explanation and intended merely for describe conceptually the structures and configurations here, which are not necessary to be made proportionally.
Fig. 1 is a solid structure diagram illustrating an embodiment of the smart container device according to the present invention, wherein a part of structure is dissected to show the interior of the embodiment of the smart container device.
Fig. 2 is a side-view diagram illustrating the frame structure of an embodiment as shown in Fig. 1 about the smart container device according to the present invention.
Fig. 3 is a right-view diagram illustrating the frame structure of the embodiment as shown in Fig. 1 about the smart container device according to the present invention.
Fig. 4 is a composition diagram illustrating an example of the control system of the embodiment shown in Fig. 1 about the smart container device according to the present invention.
Fig. 5 is a composition diagram illustrating an example of the pH value monitoring device of the embodiment shown in Fig. 4 about the smart container device according to the present invention.
Fig. 6 is a composition diagram illustrating an example of the pH value adjusting device of the embodiment shown in Fig. 4 about the smart container device according to the present invention.
Fig. 7 is a diagram illustrating cooperative work between the control system example shown in Fig. 4, the solar cell and the re-chargeable additional battery.
Fig. 8 is a diagram illustrating a communicative connection between the control system of the embodiment of the smart container device shown in Fig. 1, the server and the user terminal.

### SPECIFIC EMBODIMENTS

Firstly, it shall be stated that examples are employed below to explain the basic structure, the composition, the specialties and the advantages of the smart container device, the transportation tool, the user terminal and the management system for smart container device according to the present invention, but all the description shall not be used to form any limits to the invention.

Moreover, as regards any single technical feature described or implied in the embodiments mentioned in the text, or any single technical feature shown or implied in each of the figures, the present invention still allows any combination or deletion continuously made between these technical features (or their equivalents) without any difficulties in technologies such that it shall be convinced that these more embodiments based on the present invention are within the scope of the disclosure of the this application. Moreover, to simplify the view of figures, identical or similar components or features may be indicated merely in one or several places of the same figure.

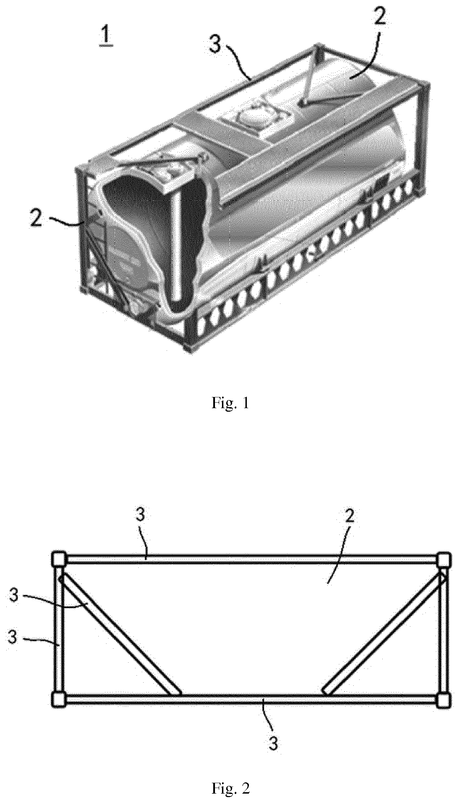

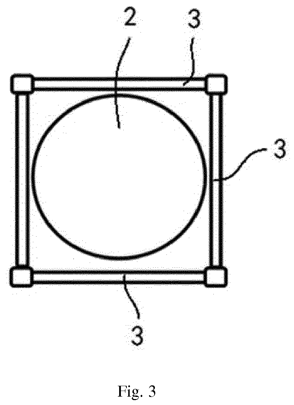

In the first place, a rough outline constitution of an embodiment of the smart container device according to the present invention is presented in Figs. 1 to 3. As shown in the embodiment, the smart container device 1 has a body 2 configured to be a tank, around which frames 3 made of a metal material (e.g., high-strength steel) are arranged to serve functions, such as protection, hoist and rigidness increase, and to help overall form a dimension in conformity with that of international standard containers -- for example, the dimension is absolutely equal to international standard containers of 20 feet so as to adapt to international multi-modal transport tools for roads, railways, waterway, etc.. As could be understood certainly, the aforesaid body may also be configured as a box, with no necessity of setting frame structures around.

Fig. 1 schematically dissects a part of the structure of the body 2 to illustrate the internal situation of the embodiment 1 of the smart container device. The body 2 owns an internal space that may be used to store fluidic materials, which could be a possible variety of liquids, gases, gas-liquid mixtures and so on. With containers employed to store or transport fluidic materials, various causes might exist to vary the property, state, volume and/or component; however, such varies are usually undesired and, thus, corresponding monitoring, control and management would be performed directed to such varies.

For instance, a control system 4 may be provided in the smart container device 1. And, the control system 4 may be provided with one or more elements, devices or apparatuses according to practical requirement of applications so as to offer a multi-purpose smart container device.

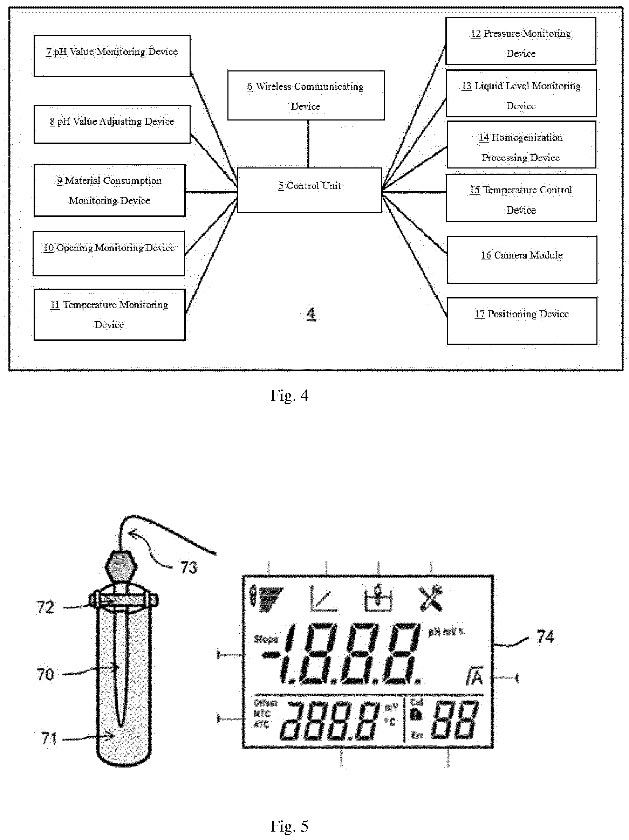

Fig. 4 shows a block diagram of the composition of the control system 4, which schematically lists a plurality of devices with different functions. However, it needs to be explained that, without a deviation from the gist of the present invention, these devices allowed to be provided separately, or together with another one or plural devices, such that a great many combinations might be formed; that is, it is possible to enable the smart container device 1 to own multiple potential functions to meet various scene requirements better. The following is the demonstrative elaboration of these functional devices separately.

Firstly, in terms of a control unit 5, it is a control section of the control system 4 and connected with a wireless communicating device 6 that intended for communications with the exterior; that is, it is possible to enable information interaction of the smart container device 1 with the exterior, and also to enable operations, such as monitoring and management of the smart container device 1 and/or fluidic materials stored therein. In practical applications, the control unit 5 may be an independent module, or a plurality of modules as allowed; that is, these modules may be respectively arranged in some devices of the control system 4 to separately perform the operations, such as monitoring and management of pressure, temperature, liquid level and location.

As shown in Fig. 4, a pH value monitoring device 7 is configured to monitor a pH value of the fluidic materials within the body 2 and, then, to send it to the control unit 5 such that one successor may determine whether or not a received pH value is within a pre-set pH range, wherein the pH range may be set and adjusted based on practical application conditions, which may be a specific numeric value or a value range.

After analysis and judgment, if the control unit 5 makes sure that a monitored pH value is outside the pre-set pH range, the control unit 5 may control a pH value adjusting device 8 to release an additive to the fluidic materials within the body 2 until the pH value monitored by the pH value monitoring device 7 falls within the pre-set pH range at last. As such, the pH value within the smart container device 1 may be timely and effectively adjusted during the storage and transportation of fluidic materials so as to ensure the fluidic materials to in a stable and reliable quality state of property.

As a demonstration, Fig. 5 shows an example of the pH value monitoring device 7, in which the pH value monitoring device may include a single-bar measuring electrode 70 and a measurement processing module 74. The single-bar measuring electrode 70 may have a measuring electrode and a reference electrode, which may be immersed into the fluidic materials within the body 2 such that a potential difference will be generated therebetween; then, the measurement processing module 74, connected with the single-bar measuring electrode 70 by wires 73, may process the potential difference to acquire a pH value of fluidic materials within the body 2.

Optionally, the single-bar measuring electrode 70 may be installed inside a protection cover 71 by means of a connection such as the employment of a fixer 71, wherein the protection cover 71 may be made of materials such as stainless steel, and be provided with one or more through holes to enable the fluidic materials to contact the single-bar measuring electrode 70 via the through holes. Moreover, optionally, the measuring electrode and the reference electrode within the single-bar measuring electrode 70 may be alkali-resistant electrodes to make them supply a protection more endurable and prolong their service life.

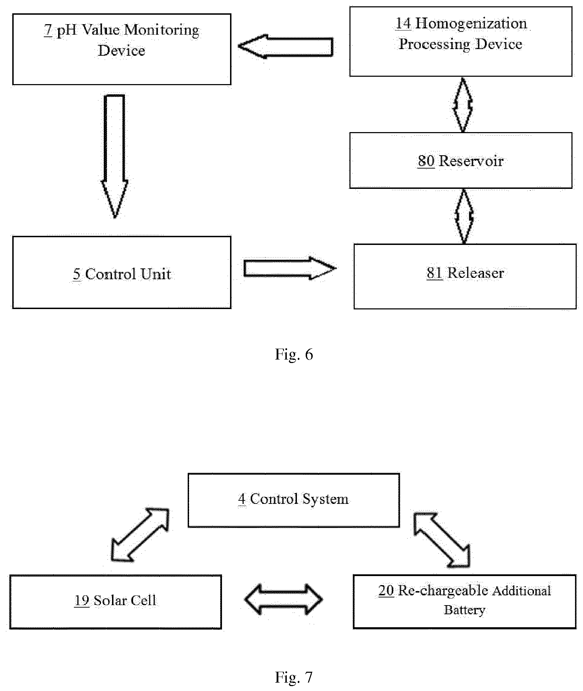

In terms of the pH value adjusting device 8, as a demonstration shown in Fig. 6, it may include a reservoir 80 for storing an additive as well as a releaser 81, wherein the releaser 81 is intended for releasing the additive stored in the reservoir into the fluidic materials within the body 2 under the control of the control unit 5. In practical applications, upon the release of additive into the fluidic materials within the body 2, it is further selectable that the control unit 5 may simultaneous control a homogenization processing device 14 (which will be introduced below) to homogenize the fluidic materials into which the additive is added, so as to accelerate the adjustment to the pH value and produce better control effect on the pH value. The homogenization processing device 14 may be configured as a stirrer, a reflux device, or them simultaneously to strengthen the processing effect of homogenization.

As a demonstration of more details, optionally, the fluidic materials may be a mixed liquor of polychloroprene dispersion adhesive (e.g., a product of Covestro, with the trade mark as Dispercol C), and the additive may be a 10% KOH solution. In one circumstance of application, because the pH value of the mixed liquor of polychloroprene dispersion adhesive is likely to lower during storage and transportation, when the pH value of the mixed liquor of polychloroprene dispersion adhesive, as monitored by the pH value monitoring device 7, is lower than 9.0, the control unit 5 will control a releaser of the pH value adjusting device 8 to release 10% KOH from the reservoir to the mixed liquor of polychloroprene dispersion adhesive of body 2, during the process of which the homogenization processing device 14 may be certainly selected to perform a homogenization processing; subsequently, when the pH value of the mixed liquor of polychloroprene dispersion adhesive that 10% KOH has been added into is higher than 10.0 as monitored by the pH value monitoring device 7, the control unit 5 will control the releaser to stop releasing 10% KOH into to the mixed liquor of polychloroprene dispersion adhesive of body 2. Through the operation, the pH value of the mixed liquor of polychloroprene dispersion adhesive within the body 2 may be kept stable and fulfill the target of maintaining a stable quality of the polychloroprene dispersion adhesive during storage and transportation.

Referring to Fig. 4 further, the control system 4 may be provided with a material consumption monitoring device , connected with the control unit 5, for monitoring the consumption level of the fluidic materials (such as, an aqueous-dispersive PUR paint or adhesive, and a waterborne PUD adhesive of Covestro with the trade mark as Dispercol U) within the body 2, such that the consumption level of fluidic materials may be acquired by liquid level information of fluidic materials collected by a liquid level monitoring device 13 which will be discussed below. As such, the data information acquired by the monitoring will help suppliers prepare materials for production more easily, and enable them to fabricate more scientific and reasonable transpiration plans and production schemes based on conditions such as user consumption ability, transportation distance and position, which could prevent unnecessary costs and expenses effectively and facilitate the fulfillment of an eco-purpose.

In terms of an opening monitoring device 10, it may be connected with the control unit 5 to monitor an open state (such as time of first opening, and number of opening times) of an opening of the body 2. With the open information of an opening, personnel concerned will be able to learn when the opening of body 2 has been opened (or the fluidic materials within the body 2 must be used up within a specific period of time) so as to offer more considerate services to users by preparing fluidic materials in advance. It shall be noted that, after better services that may support manufacturers and suppliers could be provided, the original commercial modes might be changed -- it is because: as long as the opening of body 2 is not opened, the fluidic materials stored therein still belong to suppliers; yet, once it is opened, the fluidic materials would immediately sold to users. By this means, users will acquire more protection to ensure them to gain qualified materials.

As regards a temperature monitoring device 11, it may be connected with the control unit 5 to monitor a temperature of the fluidic materials within the body 2. For example, a probe-type temperature meter may be arranged at an end of the body 2, which is optionally set to have a measuring range at least from -20°C to +40°C.

Generally, some fluidic materials, in the courses such as storage and transportation, have relatively high requirements of temperature conditions; once an allowed temperature range is exceeded, it is likely to cause losses in quality and property of them. One may implement measures of heating or cooling with the help of the temperature monitoring device 11 to recover the fluidic materials within the body 2 and keep them in a proper temperature condition. For example, during the storage and transportation of products, such as a polychloroprene dispersion adhesive and a waterborne PUD adhesive, the products may be maintained in a temperature range of 15-25°C and temperature higher than 30°C shall be avoided to prevent adverse temperature influences from direct sunlight, refrigeration and heat or from exterior materials -- it is because: the aforesaid products are ordinary sensitive to a temperature below 10°C, the low temperature as such will cause unrecoverable damages to the products; similarly, a relatively high temperature above 30°C will also affect performance of the products.

Moreover, after temperature data information of the fluidic materials within the body 2 is acquired, it is likely to reckon the reserve life of the fluidic materials to select, based on actual time, current site and on remaining reserve life, users within a proper distance range.

As an example for elaboration, the control system 4 may be provided with a temperature control device 15, connected with the control unit 5, for heating or cooling the fluidic materials within the body 2 if necessary. For example, the temperature control device 15 may be equipped with one or more steam heating tubes arranged on the outer surface of the body 2 to steam-heat the body 2 based on practical conditions. In the process of heating, it is selectable to employ the homogenization processing device 14 in combination, wherein the homogenization processing device 14 may be configured as forms, such as a stirrer, a reflux device or their combination, to acquire an effect of heating the fluidic materials within the body 2 more uniformly. Optionally, with the temperature control device 15 employed to cool the fluidic materials within the body 2, the homogenization processing device 14 may also be used to faster and better produce a processing effect of cooling fluidic materials uniformly.

In terms of a pressure monitoring device 12 and a liquid level monitoring device 13, they are connected both with the control unit 5 and are employed to monitor the pressure and liquid level of fluidic materials within the body 2 respectively. Based on the data information of the pressure and liquid level, the control unit 5 may exert a better control over the fluidic materials within the body 2.

Out of consideration for aspects like security, the control system 4 may be provided with a camera device 16 and/or a positioning device 17.

As regards the camera device 16, it may be connected with the control unit 5 to monitor set areas of the smart container device 1 itself and/or of surroundings of the smart container device 1, so as to acquire data information such as images and videos of interested regions. As regards the positioning device 17, it may be connected with the control unit 5 to monitor a current position of the smart container device 1, which will help the learning of the situation and position of each batch of fluidic materials. Optionally, the positioning device 17 may be any one or ones of the GPS system, Beidou system, Galileo system or other positioning system.

Regarding above devices, they will obtain various data information, collected during monitoring or processed, in respect of temperature, pressure, quality-liquid level, material property change, position, etc., which could be recorded and stores optionally in by in multiple ways. For example, the data information may be stored in elements with a memory function of corresponding devices. For another example, the data information may be stored entirely or partially in a memory element provided separately. Certainly, the data information may further be transmitted via a wireless communicating device 6 to a remote server. As shall be understood, the terms like "monitor" and "supervise" may include the modes of collecting, recording and storing, investigating, enquiring, transmitting to and sharing with the exterior.

In practical applications, the wireless communicating device 6 may respond a request sent from a user terminal 19 (e.g., fixed terminals such as PC and work station, and mobile terminals such as mobile phone and PDA) and, subsequently, send it to the control unit 5 which will exert a corresponding control over the control system 4 according to the requested items, or transmit to the user terminal 19 the information relevant to the request. Moreover, the control 5 may further push, on its own initiative, data information via the wireless communicating device 6 to the user terminal 19 periodically or non-periodically; such data information includes, but is not limited to, the state information (such as current positions, operation images or videos of devices or apparatuses) of the smart container device 1 or the state information (such as temperature, pressure, quality-liquid level and property change) of fluidic materials within the body 2.

Optionally, as illustrated in Fig. 7, the smart container device 1 may be provided with a solar cell 19, whereby cells, devices or apparatuses of the control system 4 may operate with the power supplied by the solar cell 19 if necessary. Certainly, the smart container device 1 may be provided with a re-chargeable additional battery 20 as well, which could be charged by the solar cell 19. The re-chargeable additional battery 20 may supply power to the cells, devices or apparatuses of the control system 4 so as to ensure the smart container device 1 to own a continuous and reliable power supply.

In practical applications, the body 2 of the smart container device 1 may be configured to have a dual-layer structure optionally, i.e., to have an inner layer and a outer layer. In terms of the inner layer of the body 2, it may be made of rigid materials such as epoxy resin, and an inner surface of the inner layer may be coated with anti-corrosion materials, such as epoxy resin, so as to strengthen anti-corrosion performance of the body 2 and prevent the corrosion of fluidic materials, whereby the smart container device 1 may be adapt to carrying and transporting fluidic materials of wider types.

As regards the outer layer of the body 2, it may be fabricated by a thermal insulation material with its outside applied with a rigid material such as glass steel, wherein the selectable insulation materials include, but are not limited to, rigid polyurethane foam material, rock wool or the like. For instance, in one embodiment, a rigid polyurethane foam material with the thickness of 30 mm or rock wool with the thickness of 25 mm may be set, and then its outside may be coated with brown glass steel with the thickness of 2 mm.

To meet requirements of various practical applications better, the body 2 may be optionally configured to have one or more compartments. Generally, to facilitate operations of loading and unloading, an opening may be set on the top of the body 2 as an opening for loading goods, while an opening may be set on the bottom of the body 2 as an opening for unloading goods.

As a demonstration only, some concrete structure parameters of embodiments of the smart container device according to the present invention are provided.

The boundary dimension of the smart container device 1 may be the length of 6058 mm, the width of 2438 mm and the height of 2591 mm, with its capacity being 24000 L, max rough weight 36000 kg, and max load 32345 kg. The inner layer of the body 2 is made of 316 stainless steel, and number of the compartments and the specific volume of each of the compartments may be set based on practical requirement.

The max work pressure of the smart container device 1 is 4 bar, with its experimental pressure being 6 bar and max allowable temperature 30°C.

The smart container device 1 is provided with a threaded steam inlet of 1 foot, a threaded steam outlet of 3/4 inch as well as a stainless-steel dust cover. Further, it is provided with an entrance hole having a diameter of 500 mm (20 inches), which is arranged the middle position of the smart container device 1 with overflow boxes disposed around, wherein the overflow boxes may be covered by thermal cap.

The smart container device 1 may be provided with DIN 500 mm flange interfaces as an air valve and a return-air interface, wherein a 2-inch ball valve and a 2-inch blind flange are set, which could be arranged the rear portion of the body 1 with overflow boxes set around, wherein the overflow boxes may be covered by thermal cap.

The smart container device 1 is further provided with a pressure release valve and a bottom outlet. A threaded pressure release valve of 2.5 inches may be employed as the pressure release valve and be installed near an entrance-hole covered with a valve pressure that may be 4.4 bar, and with an adjuster, an anti-burst plate and a pressure meter being equipped. A plain 45 ° high-lift bottom discharge valve of 3 inches or a clamp-on butterfly valve may be employed as the bottom outlet, with its end connected with an ASA standard blind flange of 3 inches, wherein a box and a cover may be configured for bottom discharge, the processing of thermal insulation may be performed for a bottom discharge box, and a CIMC bottom valve remote control device may be installed. Moreover, overflow boxes may be arranged around the bottom outlet, wherein the overflow boxes may be covered by thermal cap.

Also, temperature measuring devices, such as a probe-type temperature meter, may be installed at the backend of the body 2 of the smart container device 1 to monitor temperature. Optionally, the work metering range of the temperature measuring device shall be ensured to be at least -20 to +40 degrees centigrade.

In view of the significant technical advantages over the prior art owned by the smart container device based on the present invention as stated above, the smart container device is so suitable for operations, such as the storage and transportation of fluidic materials, which will not only lift the intelligence level and increase the security performance of exiting containers, but also save the cost in use, improve users' experience and facilitate a better fulfillment of green and environmental protection target.

Based on another technical solution of the present invention, a transportation tool on which one or more smart container devices are configured according to the present invention's design so as to embody the aforesaid technical advantages. It is understandable that, according to the present invention, the transportation tool may include, but is not limited to, automobiles, railway cars, ships and so on, and that transportation tools of this type may carry smart container devices with fluidic materials stored therein based on transportation ways, such as roads, railways and waterways.

Further, the present invention provides a user terminal, which may be employed to communicate with the smart container device designed and provided based on the present invention. To be specific, the communication between the user terminal and the wireless communication device of the smart container device may enable monitoring operations about states of the smart container devices and/ or about states of the fluidic materials within smart container devices.

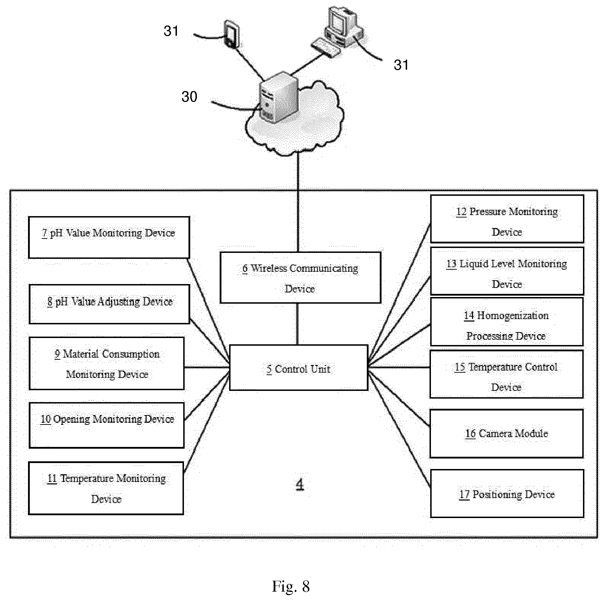

For instance, Fig. 8 shows such a user terminal 31, which could include a fixed terminal and a mobile terminal; that is, a user may carry out interaction of data information between the fixed terminal (e.g., PCs and workstations capable of providing corresponding human-computer interaction) and the wireless communicating device 6 of the smart container device, or between the mobile terminal (e.g., mobile phones and PDAs capable of providing corresponding human-computer interaction) and the wireless communicating device 6 of the smart container device, so as to perform various monitoring operations directed to the smart container device 1 and/or the fluidic materials therein. Since a relevant discussion and elaboration on the details has been made in the preceding text, no more redundant statement will be made here.

In terms of communicative connection between the user terminal 31 and the wireless communicating device 6, it could be implemented by the server 30. The server 30 may be arranged locally (e.g., a storage place where the smart container device 1 is), or at a cloud end; then, an access or data information transmission may be carried out via remote network communications. Certainly, when the distance between the user terminal 31 and the smart container device 1 is quite short, the user terminal will not need to build up a communicative connection with the wireless communicating device 6 by the server 30; instead, the communicative connection may be established directly by communication modes, such as Wi-Fi and BlueTooth. Thus, the communication modes between the user terminal 31 and the wireless communicating device 6 may include, but is not limited to, 2G, 3G, 4G, 5G, Wi-Fi, BlueTooth, etc..

Furthermore, the present invention provides a management system for smart container device, which may include the aforesaid user terminal and the server, and whereby it may perform various monitoring operations directed to a state of the smart container device designed and provided by the present invention and/or a state of the fluidic materials therein. By this means, it may enable intelligent management of container devices and fluidic materials therein.

Fig. 8 is a diagram illustrating a communicative connection between an embodiment of the management system for smart container device and an embodiment of the smart container device. Since description of very details has made, in each corresponding part of preceding text, about the technical contents of the user terminal 31, the server 30, the wireless communicating device 6 within the smart container device 1, the control unit 5 and the multiple devices within the control system 4, the mode of wireless communicative connection and the supervision of the fluidic materials, one may refer directly to corresponding parts of preceding text and no redundant description will be made here.

In the preceding part, examples are cited to elaborate the smart container device, the transportation tool, the user terminal and the management system for smart container device according to the present invention. These examples are only for the purpose of explaining the principles and the embodiments of the present invention, rather than for an limitation on the present invention. Without a deviation from the gist of the present invention, those skilled in the art may further make a variety of transformations and modifications. Therefore, all the equivalent technical solutions shall be within the scope of the present invention and be defined by each of the claims of the present invention.

## Claims

1. A smart container device (1) comprising a body (2) for storing fluidic materials, **characterized in that** it further comprises a control system (4) arranged on the body (2) and comprising: a control unit (5), a wireless communicating device (6) connected with the control unit (5) and communicating with the outside, a pH value monitoring device (7) for monitoring a pH value of the fluidic materials within the body (2) and sending it to the control unit (5), and a pH value adjusting device (8), wherein the control unit (5) determines the pH value received and controls, after determining the pH value to exceed a preset pH range, the pH value adjusting device to release an additive to the fluidic materials within the body and limit the pH value of the fluidic materials within the body (2) within the preset pH range.

2. The smart container device (1) according to claim 1, wherein the pH value monitoring device (7) comprises:
a single-bar measuring electrode (70) provided with a measuring electrode and a reference electrode for being immersed into the fluidic materials within the body (2); and
a measurement processing module (74) connected with the single-bar measuring electrode (70), for performing processing based on a potential difference between the measuring electrode and the reference electrode to acquire the pH range of the fluidic materials within the body (2) to be measured.

3. The smart container device (1) according to claim 2, wherein the pH value monitoring device (7) further comprises a protecting sleeve for receiving the single-bar measuring electrode(70), which is provided with one or more through holes, and/or an alkali-resistant electrode is employ for the measuring electrode and the reference electrode.

4. The smart container device according to one of claims 1 to 3, wherein the pH value adjusting device (8) comprises:
a reservoir (80) for storing the additive; and
a releaser (81) for releasing the additive stored in the reservoir (80) to the fluidic materials within the body (2).

5. The smart container device (1) according to one of claims 1 to 4, wherein the control system further comprises:
a material consumption monitoring device (9), connected with the control unit (5), for monitoring the consumption level of the fluidic materials within the body (2); and/or
an opening monitoring device (10), connected with the control unit (5), for monitoring an open state of an opening of the body (2); and/or
a temperature monitoring device (11), connected with the control unit (5), for monitoring a temperature of the fluidic materials within the body (2); and/or
a pressure monitoring device (12), connected with the control unit (5), for monitoring a pressure of the fluidic materials within the body (2); and/or
a liquid level monitoring device (13), connected with the control unit (5), for monitoring the liquid level of the fluidic materials within the body (2); and/or
a homogenization processing device (14), connected with the control unit (5), for homogenizing the fluidic materials within the body (2), which comprises a stirrer and a reflux device; and/or
a temperature control device (15), connected with the control unit (5), for heating or cooling the fluidic materials within the body (2); and/or
a camera device (16), connected with the control unit (5), for monitoring the smart container device (1) and/or set areas of surroundings thereof; and/or
a positioning device (17) for monitoring the position of the smart container device (1), preferably embodied as GPS system, Beidou system and/or Galileo system for positioning.

6. The smart container device (1) according to claim 4 or 5, wherein temperature control device (15) comprises one or more steam-heating tubes, distributed on a surface of the body (2), for steam-heating the body (2).

7. The smart container device (1) according to one of claims 1 to 6, wherein the control system (4) is powered by a battery (20), the battery comprising a solar cell (19) or a re-chargeable additional battery.

8. The smart container device (1) according to any one of claims 1 to 7, wherein the body (2) is configured to be a box or a tank, and/or configured to have an inner layer and a outer layer, and/or configured to have at least one compartment, and/or configured to be provided frames on four sides of the body (2).

9. The smart container device (1) according to claim 8, wherein the inner is made of a rigid material and coated with an anti-corrosion material on its inner surface, the rigid material comprising stainless steel and the anti-corrosion material comprising epoxy resin; and/or
the outer layer is made of a thermal insulation material with its outside applied with a rigid material, the thermal insulation material comprising a rigid polyurethane foam material and rock wool while the rigid material of the outer layer comprises glass steel; and/or the frames are made of a metal material comprising high-strength steel.

10. The smart container device (1) according to any one of claims 1 to 9, wherein the control unit (5) is configured to:
exert, in response to a request of a user terminal (31), corresponding control over the control system (4) via the wireless communicating device (6), or transmit to the user terminal information relevant to the request; or, push, via the wireless communicating device (6), state information of the smart container device (1) and/or the state information of the fluidic materials within the body (2) to the user terminal (31) periodically or non-periodically.

11. A transportation tool, provided thereon with one or more of the smart container devices (1) according to any one of claims 1-10, wherein the transportation tool preferably comprises a car, a rail motor car and a ship.

12. A user terminal (31), configured to communicate with the wireless communicating device (6) of the smart container device (1) according to any one of claims 1-10, and configured for monitoring a state of the smart container device and/or a state of the fluidic materials within the body.

13. The user terminal (31) according to claim 12, wherein the user terminal (31) comprises a fixed terminal and a mobile terminal, and/or the user terminal is in communicative connection with the wireless communicating device (6) via a server (30) set locally or in clouds, and/or wireless communication modes include 2G, 3G, 4G, 5G,Wi-Fi and Blue-Tooth.

14. A management system for smart container device (1), comprising:
a server (30), in communicative connection with the wireless communicating device (6) of the smart container device (1) according to any one of claims 1-10; and
a user terminal (31), in communicative connection with the server (30), for monitoring a state of the smart container device (1) and/or a state of the fluidic materials within the body (2).

15. The management system for smart container device (1) according to claim 14, wherein the user terminal (31) comprises a fixed terminal and a mobile terminal, and/or the user terminal (31) is in communicative connection with the wireless communicating device (6) via a server set locally or in clouds, and/or wireless communication modes include 2G, 3G, 4G, 5G,Wi-Fi and Blue-Tooth.
